Europäisches Patentamt

European Patent Office

Office européen des brevets

(19)

(11) Numero de publication

**0 156 671**

**A1**

# (12) DEMANDE DE BREVET EUROPEEN

(21) Numéro de dépôt: 85400273.0

(22) Date de dépôt: 15.02.85

(51) Int. Cl.⁴: **C 02 F 9/00**
**E 03 C 1/00, F 25 D 7/00**

(30) Priorité: 17.02.84 FR 8402411

(43) Date de publication de la demande:
02.10.85 Bulletin 85/40

(84) Etats contractants désignés:
AT BE CH DE FR GB IT LI LU NL SE

(71) Demandeur: DIESEL ENERGIE
115, rue du Fossé Blanc
F- 92234 Gennevilliers(FR)

(72) Inventeur: Gaches, Alain
4, rue de Verdun
F-78590 Noisy le Roi(FR)

(74) Mandataire: Loyer, Yves et al,
CABINET PIERRE LOYER 18, rue de Mogador
F-75009 Paris(FR)

(54) Dispositif de refroidissement et purification d'eau de citerne ou de réserve.

(57) Dispositif de refroidissement et purification d'eau de citerne ou réserve, caractérisé en ce qu'il se compose d'un réservoir calorifugé (3) associé à un circuit fermé (9) à circulation forcée, prenant l'eau dans le réservoir (3) pour le retourner audit réservoir par l'intermédiaire d'un moyen de pompage (10), d'un moyen de refroidissement (7) et d'un moyen de purification (24,25), ledit circuit (9) étant muni d'un branchement (13) raccordé à une citerne (1) ou réserve d'eau équivalente, et muni de moyens d'alimentation (11,39) à partir de cette citerne (1), moyens commandés par un contrôleur (12) du niveau interne de réservoir (3) calorifugé en (4), lequel est en outre munie d'une sortie (5) destinée à être branchée sur le circuit de distribution d'eau (2).

Fig. 2

EP 0 156 671 A1

Dispositif de refroidissement et purification
d'eau de citerne ou de réserve

Dans de nombreux cas, et particulièrement dans les régions qui manquent d'eau, on est conduit à transporter et stocker de l'eau en citernes pour l'alimentation, par exemple, d'habitations.

L'eau ainsi stockée s'échauffe et se pollue du fait du séjour en citerne et devient impropre aux usages prévus, soit du fait de sa température, soit du fait de sa pollution.

Pour remédier à ces inconvénients, il est possible de prévoir sur le circuit de distribution des moyens de refroidissement, tels que ceux employés pour le conditionnement d'air, et/ou de purification, tels que ceux employés dans les stations d'épuration, mais ce sont là des installations compliquées et coûteuses à réaliser et à installer, et elles sont d'autre part, grandes consommatrices d'énergie.

La présente invention a pour objet un dispositif simple, peu coûteux à réaliser, facile à installer et assurant le refroidissement et/ou la purification des eaux de citernes avec le minimum de dépense d'énergie.

Le dispositif selon l'invention consiste en un réservoir calorifugé associé à un circuit fermé à circulation forcée puisant l'eau dans ledit réservoir pour le retourner par une pompe audit réservoir par l'intermediaire d'un moyen de refroidissement et d'un moyen de purification, ledit circuit étant muni d'un branchement raccordé à une citerne (ou borne d'eau équivalente) et muni de moyens d'alimentation à partir de ladite citerne, moyens commandés par un contrôleur du niveau interne du réservoir calorifugé, lequel est en outre muni d'une sortie destinée à être branchée sur le circuit de distribution d'eau.

a) Le branchement à la citerne est contrôlé par une vanne soumise à la commande du contrôleur de niveau.

b) Le branchement à la citerne comporte une pompe soumise à la commande du contrôleur de niveau.

c) Ledit branchement comporte un col de cygne dont le point haut est au-dessus du niveau maximal de la citerne, et est muni d'une mise à l'air libre.

d) Le moyen de refroidissement est du type aéro-refroidisseur à circulation forcée d'air, par ventilateur, sur des ailettes dans lesquelles circule l'eau.

e) Le moyen de refroidissement est constitué par un boîtier, traversé par un courant d'air forcé par un ventilateur placé sous le contrôle d'un thermostat prévu dans le réservoir calorifugé, ledit boîtier étant traversé également à sa partie inférieure par un échangeur placé sur le circuit fermé ci-dessus, et comportant une rampe d'arrosage supérieure assurant une pluie traversant le courant d'air, ladite rampe étant alimentée par une pompe puisant l'eau à la partie inférieure du boîtier.

f) Le circuit d'arrosage du boîtier est branché sur le circuit fermé de circulation forcée du réservoir par l'intermédiaire d'une vanne commandée par un contrôleur de niveau d'eau interne au boîtier.

g) Le moyen de purification d'eau comprend un filtre à charbon actif et une lampe à ultraviolets.

h) Le circuit fermé est constitué d'un trop-plein du réservoir calorifugé déversant l'eau vers un volume à l'air libre d'où cette eau est reprise par pompe pour être déversée dans le réservoir à un niveau de préférence supérieur à celui du trop-plein.

i) La sortie du réservoir a la forme d'un siphon à deux sommets, dont le sommet le plus élevé est à un niveau intermédiaire entre celui de l'alimentation du réservoir et celui du trop-plein, ledit sommet étant raccordé à la distribution générale par un point bas de niveau inférieur au bord du réservoir suivi d'un sommet mineur, ledit sommet étant relié par un by-pass de faible section à la partie haute de l'alimentation.

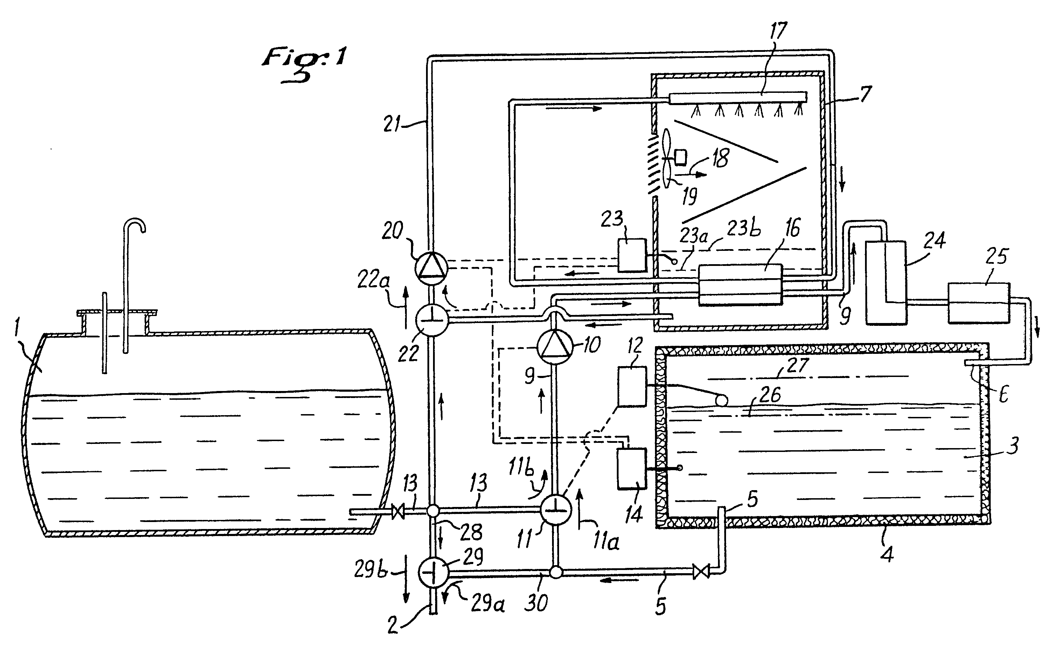

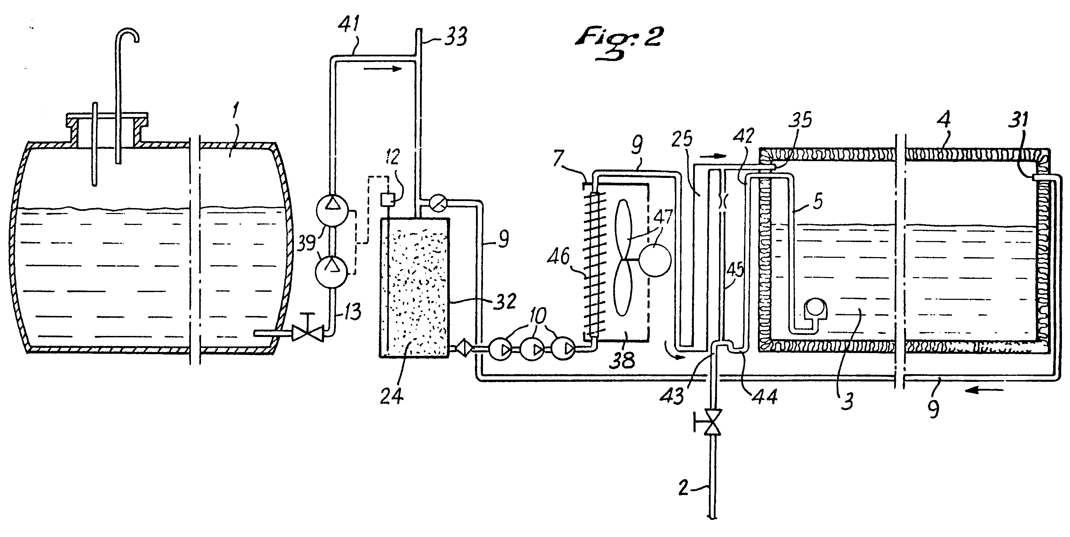

L'invention sera plus amplement décrite avec référence au dessin annexé sur lequel ont été représentés schématiquement figure 1 et figure 2, deux exemples de réalisation de l'invention.

En se reportant au schéma de la figure 1, on voit que le dispositif de l'invention est un ensemble compact destiné à être interposé entre une citerne 1 ou toute autre réserve d'eau, et une canalisation de distribution 2.

Cet ensemble est constitué d'un réservoir 3 muni d'un calorifugeage 4 associé à un circuit fermé 9 puisant l'eau du réservoir en 5 par la pompe 10 pour le retourner au réservoir en 6 par l'intermédiaire d'un refroidisseur 7 d'un moyen de purification 24, 25; le circuit 9 est branché en 13 sur la citerne 1 par l'intermédiaire de la vanne 11 qui est commandée par le contrôleur 12 du niveau interne du réservoir.

Dans l'exemple représenté, on a adopté la solution d'une vanne à trois voies 11 qui assure la communication soit entre les parties 5 et 9 du circuit
fermé (flèche 11a), soit entre la citerne et le circuit
9 par le branchement 13 (flèche 11b).

Le dispositif comporte en outre un thermostat
14 contrôlant, par un circuit électrique, le refroidisseur 7, ainsi que la pompe 10.

Dans cet exemple, le refroidisseur 7 est constitué d'un volume à la partie inférieure duquel se
trouve un échangeur 16 soumis à l'arrosage d'une rampe
17, un courant d'air étant si nécessaire réalisé en 18
par le ventilateur 19 sur le trajet de la pluie tombant
de la rampe 17 sur l'échangeur 16; l'eau s'accumulant
à la parite inférieure du récipient 7 est reprise par la
pompe 20 et retournée à la rampe 17. Le circuit d'eau 21
du refroidisseur est branché sur la circulation forcée 9
par la vanne 22 commandée par un contrôleur de niveau 23
placé dans le récipient 7. La purification comprend de
préférence au moins un filtre 24, de préférence à charbon actif, et au moins une lampe à rayons ultraviolets 25.

Le fonctionnement du dispositif est le suivant:

Lorsque le niveau d'eau dans le réservoir 3
tombe au-dessous d'un niveau inférieur prédéterminé 26,
la vanne 11 met en communication le circuit 9 et la
citerne 1 selon le trajet 11b et la pompe assure le
remplissage du réservoir 3 selon le trajet 10, 7, 24,
25, 6 de sorte que l'eau entrant dans le réservoir se
trouve purifiée et qu'il n'entre jamais d'eau polluée
dans le réservoir 3.

Lorsque l'eau atteint, dans le réservoir 3, le
niveau 27, le contrôleur 12 actionne la vanne 11, qui
passe de la communication 11b à la communication 11a,
entre 5 et 9. L'eau du réservoir circule alors en circuit fermé selon le trajet 5, 10, 7, 24, 25, 6 et se
refroidit progressivement jusqu'à la température de
réglage du thermostat 14 qui arrête alors la pompe 20 et éventuellement le ventilateur 19 et par suite le refroidissement.

Lorsque les utilisateurs prélèvent de l'eau en 2, le niveau du réservoir 3 baisse et dès qu'il atteint le niveau prédéterminé 26, la communication 11b avec la citerne est rétablie et le réservoir est de nouveau rempli.

Lorsque le niveau de l'eau dans le refroidisseur 7 tombe au-dessous du niveau 23a, le contrôleur de niveau 23 actionne la vanne 22 dans le sens de la communication 22a jusqu'à ce que le niveau atteigne la valeur 23b pour laquelle le même contrôleur 23 rétablit la communication 22b et le fonctionnement en circuit fermé du refroidisseur.

Dans l'exemple de la figure 2 qui correspond à une forme préférée de réalisation, le circuit fermé 9 est réalisé à partir d'un déversoir de trop-plein 31 qui alimente un volume 32 avec mise à l'air libre en 33 et reprise de l'eau par la, ou les pompes 10 pour aboutir au réservoir 3 calorifugé en 4, en un point d'alimentation 35 situé plus haut que le déversoir 31, (après purification sur filtre à charbon actif 24 et rayons ultraviolets 25 et refroidissement 7).

Dans cette variante l'alimentation du circuit 9 à partir de la citerne 1 est réalisée par la ou les pompes 39 commandées par le contrôleur de niveau 12 qui contrôle le niveau dans le réservoir 3, et met en marche les pompes 39 dès que ce niveau baisse au-dessous du déversoir 31 pour les interrompre lorsque ce niveau se rapproche de celui de l'alimentation 35.

Pour éviter tout accident, la cuve 1 est de préférence reliée au circuit 9 par un col de cygne 41 de niveau plus élevé, avec une mise à l'air libre qui, dans l'exemple représenté, coïncide avec la mise à l'air libre 33 du circuit 9. Ainsi le circuit 9 ne peut pas être alimenté par la citerne 1 en dehors des périodes de fonctionnement des pompes 39.

La distribution 2 est alimentée par la sortie 5 à partir du réservoir 3 par le siphon 42 qui possède deux sommets 42 et 43 séparés par le point bas 44. Le sommet 42 est à niveau compris entre les niveaux 31 et 35, le point bas 44 est au niveau du fond du réservoir 3 ou au-dessous, le sommet 43 est entre les deux et relié par le by-pass 45 à faible section à la partie haute de l'alimentation 35.

Ainsi, l'amorçage du siphon 42 est réalisé automatiquement, même en cas de fuite, par le by-pass 45 et le jeu des niveaux 31, 35, 42, 44.

Dans la variante de la figure 2, le filtre 24 (par exemple à charbon actif) est placé dans le bac 32 où se déverse le trop-plein 31. Mais il peut tout aussi bien être placé entre les pompes 34 et le réservoir 4. Le refroidisseur 7 de la figure 2 est un simple aéro-refroidisseur, c'est-à-dire un radiateur à grande surface d'ailettes 46 placé directement sur le circuit 9, enserré avec les purificateurs 24 et 25, et combiné avec un ventilateur 47 assurant une circulation forcée d'air sur les ailettes du radiateur 46. L'expérience montre que dans de nombreux cas, cette disposition est suffisante, sans qu'il soit besoin d'arrosage comme dans la figure 1, notamment en raison du refroidissement nocturne de l'air.

Le dispositif de l'invention présente de nombreux avantages: il forme un tout compact facile à interposer entre une réserve d'eau 1 et une distribution 2; la capacité du réservoir calorifugé 3 peut être adaptée au rythme de la consommation d'eau indépendamment de la capacité de la citerne ou réserve 1. De ce fait la dépense d'énergie de refroidissement et purification est adaptée à la consommation. En particulier dans certains pays chauds, la température de l'eau des citernes peut atteindre 60 à 70°C; cette température, et la pollution qu'elle engendre, rendent cette eau impropre à toute utilisation notamment pour la toilette. Or la consommation d'eau a lieu à certaines heures de la journée, matin, midi, soir; en adaptant la capacité du réservoir 3 à ces consommations de pointes, on parvient ainsi à mettre à la disposition des usagers de l'eau fraîche et purifiée avec le minimum de dépense d'énergie. Une capacité de réservoir 3 de l'ordre de 3000 litres seulement permet ainsi d'alimenter en eau fraîche et purifiée un immeuble entier.

L'exemple de la figure 2 est préféré parce qu'il est plus simple, moins coûteux et plus fiable: Les pompes 10 et le ventilateur 47 du refroidisseur 7 peuvent fonctionner 24 heures sur 24, les vannes sont supprimées et le seul élément à fonctionnement intermittent alors constitué par les pompes 39 commandées par le contrôleur de niveau 12 qui peut être, par exemple, un simple pressostat. De plus, le fait de prélever l'eau en : vers la distribution 2 par le moyen d'un siphon 42, supprime les problèmes d'étanchéité qui alourdissent considérablement la fabrication du réservoir calorifugé 3 en cas de sortie inférieure: Un simple film plastique permet alors de réaliser cette étanchéité.

Dans l'exemple de la figure 1, il y a lieu de prévoir un by-pass 28 contrôlé par une vanne 29 entre citerne 1 et distribution 2 pour le cas de panne, réparation ou entretien du dispositif (flèche 29b). La vanne 29 est une vanne à trois voies qui contrôle également la sortie 30 de sorte qu'il ne puisse y avoir de communication entre la citerne 1 et le réservoir 3 par la sortie 30 lorsque la citerne communique directement avec la distribution 2 (flèche 29a).

## REVENDICATIONS

1. Dispositif de refroidissement et purification d'eau de citerne ou réserve, caractérisé en ce qu'il se compose d'un réservoir calorifugé (3) associé à un circuit fermé (9) à circulation forcée, prenant l'eau dans le réservoir (3) pour le retourner audit réservoir par l'intermédiaire d'un moyen de pompage (10), d'un moyen de refroidissement (7) et d'un moyen de purification (24, 25), ledit circuit (9) étant muni d'un branchement (13) raccordé à une citerne (1) ou réserve d'eau équivalente, et muni de moyens d'alimentation (11, 39) à partir de cette citerne (1), moyens commandés par un contrôleur (12) du niveau interne du réservoir (3) calorifugé en (4), lequel est en outre muni d'une sortie (5) destinée à être branchée sur le circuit de distribution d'eau (2).

2. Dispositif selon la revendication 1, caractérisé en ce que le branchement à la citerne (13) est contrôlé par une vanne (11) soumise à la commande du contrôleur de niveau (12).

3. Dispositif selon la revendication 1, caractérisé en ce que le branchement (13) comporte une pompe (39) soumise à la commande du contrôleur de niveau (12).

4. Dispositif selon la revendication 4, caractérisé en ce que ledit branchement (13) comporte un col de cygne dont le point haut (41) est au-dessus du niveau maximal de la citerne, et est muni d'une mise à l'air libre (33).

5. Dispositif selon l'une quelconque des revendications précédentes, caractérisé en ce que le moyen de refroidissement (7) est du type aéro-refroidisseur comportant un ventilateur (47) assurant une circulation forcée d'air sur des ailettes (46) ou surfaces dans lesquelles circule l'eau du circuit fermé (9).

0156671

6. Dispositif selon l'une quelconque des revendications 1 à 4, caractérisé en ce que le moyen de refroidissement est constitué par un boîtier (7) comportant à sa partie inférieure un échangeur (16) placé sur le circuit fermé (9) ci-dessus et comportant une rampe d'arrosage supérieure (17) assurant une pluie traversant le courant d'air (18), ladite rampe étant alimentée par une pompe (20) puisant l'eau à la partie inférieure du boîtier.

7. Dispositif selon l'une quelconque des revendications précédentes, caractérisé en ce que le moyen de purification d'eau (8) comprend un filtre à charbon actif (24) et une lampe à ultraviolets (25).

8. Dispositif selon l'une quelconque des revendications précédentes, caractérisé en ce que le circuit fermé (9) est constitué d'une sortie (31) en forme de déversoir de trop-plein, déversant l'eau vers un volume à l'air libre (32) d'où cette eau est reprise par les pompes (10) pour être déversée dans le réservoir (3) à un niveau (35) de préférence supérieur à celui du trop-plein (31).

9. Dispositif selon l'une quelconque des revendications précédentes, caractérisé en ce que la sortie (5) du réservoir (3) a la forme d'un siphon à deux sommets (42 et 43), le plus élevé (42) étant à un niveau intermédiaire entre celui de l'alimentation (35) et celui du trop-plein (31), ledit sommet (42) étant suivi d'un point bas (44) de niveau inférieur ou égal à celui du fond du réservoir lui-même muni d'un point haut ou sommet suivant (43), intermédiaire entre (44 et 42), et relié par un by-bass de faible section à la partie haute de l'alimentation.

*Fig:1*

0156671

*Fig. 2*

0156671

Office europeen
des brevets

RAPPORT DE RECHERCHE EUROPEENNE

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| A | US-A-4 120 787 (B.Y. YARGEAU) <br> * En entier * | 1-9 | C 02 F 9/00 <br> E 03 C 1/00 <br> F 25 D 7/00 |
| | --- | | |
| A | US-A-3 196 892 (R.H. SAVAGE et al.) <br> * En entier * | 1-4,6 | |
| | --- | | |
| A | DE-A-2 922 735 (MAINTAL-KLIMA) <br> * Pages 1-4; figure 2 * | 1-4 | |
| | --- | | |
| A | EP-A-0 096 377 (E. ALHÄUSER) <br> * Revendication 1; figure 1 * | 1,7 | |
| | --- | | |
| A | US-A-1 929 583 (E.S. HALSEY) <br> * En entier * | 1-5 | |
| | --- | | **DOMAINES TECHNIQUES RECHERCHES (Int. Cl.4)** |
| A | US-A-2 488 116 (M. BERLOWITZ) <br> * En entier * | 1-3 | |
| | --- | | |
| A | FR-A-2 373 860 (KRAFTWERK UNION) <br> * En entier * | 1 | C 02 F <br> E 03 C <br> F 25 D <br> F 28 C <br> F 28 D |
| | --- | | |
| A | DE-A-2 124 098 (AQUA-FILT UNNEBRINK KG) <br> * En entier * | 1 | |
| | ----- | | |

Le present rapport de recherche a ete etabli pour toutes les revendications

| Lieu de la recherche | Date d'achevement de la recherche | Examinateur |
|---|---|---|
| LA HAYE | 06-06-1985 | VAN AKOLEYEN H.T.M. |